# EUROPEAN PATENT APPLICATION

(11) **EP 2 505 351 A1**
(43) Date of publication of application: **03.10.2012**
(21) Application number: 10833359.2
(22) Date of filing: 19.11.2010
(51) Int. Cl.: B32B 15/08

(54) **GALVANIZED STEEL SHEET**

(30) Priority: 26.11.2009 JP 2009268765
(71) Applicant: JFE Steel Corporation, Tokyo, 100-0011 (JP)
(72) Inventor: HOSHINO, Katsuya, Tokyo 100-0011 (JP); KUBOTA, Takahiro, Tokyo 100-0011 (JP); MIYOSHI, Tatsuya, Tokyo 100-0011 (JP); TADA, Masahiko, Tokyo 100-0011 (JP)
(74) Representative: Grünecker, Kinkeldey, Stockmair & Schwanhäusser
(86) International application number: PCT/JP2010/071190
(87) International publication number: WO 2011/065514

(57) **Abstract**

A galvanized steel sheet having excellent press-formability is obtained. The steel sheet has an organic inorganic complex coating on the surface thereof which contains an organic resin and a crystalline layered substance and has an average film thickness of 0.10 to 2.0 µm. The organic inorganic complex coating contains the crystalline layered substance in a solid content of not less than 0.5 parts by weight with respect to 100 parts by weight of the solid content of the organic resin. For example, the crystalline layered substance is preferably a layered double hydroxide represented by [M²⁺₁₋ₓM³⁺ₓ(OH)₂][Aⁿ⁻]_{x/n}·zH₂O wherein M²⁺ is one, or two or more selected from Mg²⁺, Ca²⁺, Fe²⁺, Ni²⁺ and Zn²⁺, M³⁺ is one, or two or more selected from Al³⁺, Fe³⁺ and Cr³⁺, and Aⁿ⁻ is one, or two or more selected from OH⁻, CO₃²⁻, Cl⁻ and (SO₄)²⁻.

## Description

### Technical Field

The present invention relates to galvanized steel sheets that exhibit a low sliding friction during press forming and have excellent press-formability.

### Background Art

Galvanized steel sheets are used in various fields and are frequently used for automobile bodies. For galvanized steel sheets to be used in such an application, they are subjected to press forming. However, galvanized steel sheets are poor in press-formability compared to cold rolled steel sheets. This drawback arises from the fact that surface-treated steel sheets exhibit a higher sliding friction with respect to a press mold compared to cold rolled steel sheets.

That is, a high sliding friction is generated between a mold and a bead so as to prevent the surface-treated steel sheet from being slid smoothly into the press mold, often resulting in a fracture of the steel sheet. In particular, galvanized steel sheets coated with pure zinc exhibit a higher sliding friction due to the zinc coating having become attached to a mold (a phenomenon known as galling). As a result, cracks are generated in the middle of continuous press forming, thus severely adversely affecting the productivity of automobiles. Further, the recent tight restrictions on CO₂ emissions have led to a trend in which the use rate of high-strength steel sheets has been increased for the purpose of automobile body weight reduction. When high-strength steel sheets are used, an increased contact pressure is encountered during press-forming and the attachment of a coating to a mold becomes a more serious problem.

A widely used method of improving press-formability of galvanized steel sheets is to apply a lubricant oil having a high viscosity. Because of the high viscosity of such a lubricant oil, however, paint defects occur during a painting step due to insufficient degreasing. Further, other problems are encountered such as a destabilized press performance caused by a lubricant being exhausted during pressing. Thus, there has been a strong demand for galvanized steel sheets themselves to be improved in terms of press-formability.

To solve these problems, Patent Literature 1 and Patent Literature 2 disclose techniques in which the surface of a galvanized steel sheet is subjected to an electrolytic treatment, a dip treatment, a coating oxidation treatment or a heat treatment so as to form a zinc-based oxide film, thereby improving weldability and processability.

Patent Literature 3 discloses a technique in which a galvanized steel sheet is dipped into an aqueous solution containing sodium phosphate at 5 to 60 g/L and having a pH of 2 to 6,
or is subjected to an electrolytic treatment or is coated with the above aqueous solution so as to form an oxide film based on phosphorus oxide on the surface of the galvanized steel sheet, thereby improving press-formability and chemical conversion treatment properties.

Patent Literature 4 discloses a technique in which the surface of a galvanized steel sheet is subjected to an electrolytic treatment, a dip treatment, a coating oxidation treatment or a heat treatment so as to form nickel oxide, thereby improving press-formability and chemical conversion treatment properties.

### Citation List

### Patent Literature

PTL 1: Japanese Unexamined Patent Application Publication No. 53-60332
PTL 2: Japanese Unexamined Patent Application Publication No. 2-190483
PTL 3: Japanese Unexamined Patent Application Publication No. 4-88196
PTL 4: Japanese Unexamined Patent Application Publication No. 3-191093

### Summary of Invention

### Technical Problem

The above conventional techniques are effective with respect to galvanized steel sheets with relatively low strength which are frequently used for automotive exterior panels. However, galvanized steel sheets with high strength which undergo an increased contact pressure during press forming cannot be necessarily improved in terms of press-formability.

The present invention is aimed at solving the problems described hereinabove. It is therefore an object of the invention to provide galvanized steel sheets that exhibit excellent press-formability even when the galvanized steel sheets are hardly formable materials such as high-strength galvanized steel sheets exerting an increased contact pressure during press forming.

### Solution to Problem

Conventional films achieve a decrease in frictional resistance by intermediating between the zinc coating and a mold. However, an increased amount of film is worn away under high contact pressure conditions which are encountered in the press forming of high-strength steel sheets. Thus, sufficient effects cannot be obtained after the slide distance has exceeded a certain level.
The present inventors carried out studies in order to solve the above problem. They have then found that a film of a crystalline layered substance which is formed so as to coat the surface of a galvanized steel sheet is effective for markedly improving sliding properties.

The present invention has been made on the basis of the above finding. The invention is summarized below.
[1] A galvanized steel sheet which has an organic inorganic complex coating containing an organic resin and a crystalline layered substance on the surface, the organic inorganic complex coating having an average film thickness of 0.10 to 2.0 µm and containing the crystalline layered substance in a solid content of not less than 0.5 parts by weight with respect to 100 parts by weight of the solid content of the organic resin.
[2] The galvanized steel sheet described in [1], wherein the crystalline layered substance is a layered double hydroxide represented by [M²⁺_{1-X}M³⁺_{X}(OH)₂] [Aⁿ⁻]_{x/n}·zH₂O wherein M²⁺ is one, or two or more selected from Mg²⁺, Ca²⁺, Fe²⁺*,* Ni²⁺, Zn²⁺, Pb²⁺ and Sn²⁺, M³⁺ is one, or two or more selected from Al³⁺, Fe³⁺, Cr³⁺, 3/4Zr⁴⁺ and Mo³⁺, and Aⁿ⁻ is one, or two or more selected from OH⁻, F⁻, CO₃²⁻, Cl⁻, Br⁻, (C₂O₄)²⁻, I⁻, (NO₃)⁻, (SO₄)²⁻, (BrO₃)⁻, (IO₃)⁻, (V₁₀O₂₈)⁶⁻, (Si₂O₅)²⁻, (ClO₄)⁻, (CH₃COO)⁻, [C₆H₄(CO₂)₂]²⁻, (C₆H₅COO)⁻, [C₈H₁₆(CO₂)₂]²⁻, n(C₈H₁₇SO₄)⁻, n(C₁₂H₂₅SO₄)⁻, n(C₁₈H₃₇SO₄)⁻ and SiO₄⁴⁻.
[3] The galvanized steel sheet described in [1], wherein the crystalline layered substance is a layered double hydroxide represented by [M²⁺_{1-X}M³⁺_{X}(OH)₂] [Aⁿ⁻]_{X/n} · zH₂O wherein M²⁺ is one, or two or more selected from Mg²⁺, Ca²⁺, Fe²⁺ *,* Ni²⁺ and Zn²⁺, M³⁺ is one, or two or more selected from Al³⁺, Fe³⁺ and Cr³⁺, and Aⁿ⁻ is one, or two or more selected from OH⁻, CO₃²⁻, Cl⁻ and (SO₄)²⁻.
[4] The galvanized steel sheet described in any of [1] to [3], wherein the organic resin is one, or two or more selected from epoxy resins, modified epoxy resins, polyhydroxy polyether resins, polyalkylene glycol-modified epoxy resins, urethane-modified epoxy resins, resins obtained by further modifying these resins, polyester resins, urethane resins, silicon resins and acrylic resins.
   In the invention, the term "galvanized steel sheet" is used as a collective term for steel sheets which have been coated with zinc by any of various processes such as hot dip coating, electrolytic coating, deposition coating and spray coating. The term "galvanized steel sheet" includes hot dip galvanized steel sheets which have not been subjected to any alloying treatment as well as galvannealed steel sheets which have been subjected to an alloying treatment. Advantageous Effects of Invention

According to the present invention, a galvanized steel sheet is obtained which exhibits a low sliding friction at a portion of the steel sheet that is at risk of being fractured during press forming, even in the case where such a portion undergoes a high contact pressure during press forming, and which shows excellent press-formability even at a portion of the steel sheet that undergoes a high contact pressure and is expected to cause the attachment of coating onto a mold.

### Brief Description of Drawings

[Fig. 1] Fig. 1 is a schematic front view of a dynamic friction coefficient measuring apparatus.
[Fig. 2] Fig. 2 is a schematic perspective view illustrating a shape and a size of the bead in Fig. 1 (bead shape 1).
[Fig. 3] Fig. 3 is a schematic perspective view illustrating a shape and a size of the bead in Fig. 1 (bead shape 2).

### Description of Embodiments

Conventional films achieve a decrease in frictional resistance by intermediating between a zinc coating and a mold. However, an increased amount of film is worn away under contact pressure conditions which are encountered in the press forming of high-strength steel sheets. Thus, sufficient effects cannot be obtained after the slide distance has exceeded a certain level.

The present inventors carried out studies in view of the above fact. The present inventors have found that sliding properties are markedly improved by coating the surface of a galvanized steel sheet with a crystalline layered substance. Further, it has been found that a crystalline layered substance can adhere to the surface firmly by being formed into a complex together with an organic resin. Thus, according to the present invention, the surface of a galvanized steel sheet has an organic inorganic complex coating containing an organic resin and a crystalline layered substance.

The mechanism by which the crystalline layered substance contained in the organic inorganic complex coating produces lubricating effects is not clear but can be explained as follows. During sliding, the adhesive force acting between a mold and a coating generates a shear stress on the surface of the coating. The crystalline layered substance intermediating between the coating and the mold is slip-deformed so as to absorb the shearing deforming stress generated on the surface. Even after the crystalline layered substance has been worn away from the surface layer of the galvanized steel sheet, it becomes attached to the mold and effectively works so as to reduce the frictional resistance. Thus, sufficient effects can be obtained even under high contact pressure conditions simulating the press forming of high-strength steel sheets.
Further, the configuration in which the organic inorganic complex coating contains an organic resin allows the crystalline layered substance to cover the surface of the steel sheet in a uniform thickness.
For the reasons described hereinabove, the galvanized steel sheet according to the invention has an organic inorganic complex coating which contains an organic resin and a crystalline layered substance on the surface of the steel sheet. This configuration is the most important requirement in the present invention.

The organic inorganic complex coating which contains an organic resin and a crystalline layered substance (hereinafter, sometimes simply referred to as organic inorganic complex coating) has an average film thickness of 0.10 µm to 2.0 µm as measured from a cross section obtained by SEM. If the average film thickness is less than 0.10 µm, it is difficult to form such a coating on the surface of a steel sheet uniformly. If the average film thickness is in excess of 2.0 µm, there is a risk that spot weldability which is an important property for the production of automobiles may be lowered.

The thickness of the organic inorganic complex coating may be measured from a result obtained by ultralow-accelerating-voltage SEM with respect to an FIB-processed cross section. The identification of crystal structure for determining whether the crystalline layered substance is crystalline may be performed by thin-film X-ray diffractometry.

The crystalline layered substance is contained in a solid content of not less than 0.5 parts by weight with respect to 100 parts by weight of the solid content of the organic resin. Any content that is less than 0.5 parts by weight is not sufficiently high for the crystalline layered substance to exhibit desirable effects when in contact with a mold during sliding.

In the invention, the term "crystalline layered substance" means a crystal in which unit crystal lattices formed of plate-shaped covalent crystals are stacked on top of one another with a relatively weak bond such as intermolecular force, hydrogen bond or electrostatic energy. Among such substances, a layered double hydroxide that has a structure represented by [M²⁺_{1-X}(OH)₂][Aⁿ⁻]_{x/n} · zH₂O is a preferred crystalline layered substance because negatively charged anions bond to plate-shaped, positively charged divalent and trivalent metal hydroxides through electrostatic energy in order to neutralize electrical charge while these ions are stacked on top of one another so as to form a layered crystalline structure.
Such a layered double hydroxide represented by [M²⁺_{1-X}M³⁺_{X}(OH)₂][Aⁿ⁻]_{x/n} · zH₂O may be identified by X-ray diffractometry. It is known that a substance which can be represented by the above formula is a layered crystal.

M²⁺ is preferably one, or two or more selected from Mg²⁺, Ca²⁺, Fe²⁺, Ni²⁺, Zn²⁺, Pb²⁺ and Sn²⁺. In particular, Mg²⁺, Ca²⁺, Fe²⁺*,* Ni²⁺ and Zn²⁺ have been confirmed to occur naturally or synthetically in layered double hydroxides, and are more preferable because such layered double hydroxide species give stable layered double hydroxides.

M³⁺ is preferably one, or two or more selected from Al³⁺, Fe³⁺, Cr³⁺, 3/4Zr⁴⁺ and Mo³⁺. In particular, Al³⁺, Fe³⁺ and Cr³⁺ have been confirmed to occur naturally or synthetically in layered double hydroxides, and are more preferable because such layered double hydroxide species give stable layered double hydroxides.

Aⁿ⁻ is preferably one, or two or more selected from OH⁻, F⁻, CO₃²⁻, Cl⁻, Br⁻, (C₂O₄)²⁻, I⁻, (NO₃)⁻, (SO₄)²⁻, (BrO₃)⁻, (IO₃)⁻, (V₁₀O₂₈)⁶⁻, (Si₂O₅)²⁻, (ClO₄)⁻, (CH₃COO)⁻, [C₆H₄(CO₂)₂]²⁻, (C₆H₅COO)⁻, [C₈H₁₆(CO₂)₂]²⁻, n(C₈H17SO₄)⁻, n(C₁₂H₂₅SO₄)⁻, n(C₁₈H₃₇SO₄)⁻ and SiO₄⁴⁻. These anions have been confirmed to form layered double hydroxides by being incorporated between layers of layered double hydroxide species. In particular, OH⁻, CO₃²⁻, Cl⁻ and (SO₄)²⁻ may be used as interlayer anions more suitably because they can be incorporated between layers of layered double hydroxide species more easily compared to other kinds of anions and thus films can be formed on the surface of galvanized steel sheets in a short time.

Next, there will be described a method for forming the organic inorganic complex coating on the surface of a galvanized steel sheet.

First, a method of forming the crystalline layered substance is described. Here, an exemplary method is illustrated in which a layered double hydroxide that is one kind of crystalline layered substance is prepared in the form of powder. For example, such a double hydroxide is formed by dropping an anion-containing solution into a cation-containing aqueous solution. An aqueous solution containing one or more kinds of inorganic anions or organic anions (Aⁿ⁻) is dropped into an aqueous solution containing one or more kinds of divalent cations (M²⁺) and one or more kinds of trivalent cations (M³⁺). In this process, the pH of the reaction suspension liquid is adjusted to be 10±0.1 by dropping a 2.0 M NaOH solution.

In the reaction suspension liquid, the divalent cations and the trivalent cations form hydroxides and are present in the form of colloids. These hydroxides are precipitated as layered double hydroxides when one or more specific anions selected from OH⁻, F⁻, CO₃²⁻, Cl⁻, Br⁻, (C₂O₄)²⁻, I⁻, (NO₃)⁻, (SO₄)²⁻, (BrO₃)⁻, (IO₃)⁻, (V₁₀O₂₈)⁶⁻, (Si₂O₈)²⁻, (ClO₄)⁻, (CH₃COO)⁻, [C₆H₄(CO₂)]²⁻, (C₆H₅COO)⁻, [C₈H₁₆(CO₂)₂]²⁻, n(C₈H₁₇SO₄)⁻, n(C₁₂H₂₅SO₄)⁻, n(C₁₈H₃₇SO₄)⁻ and SiO₄⁴⁻ are dropped into the liquid. Next, the precipitate is separated using a centrifugal separation apparatus and dried to give a powdery layered double hydroxide.
The obtained powdery substance may be identified as being a layered compound by X-ray diffractometry.

Next, the obtained powdery layered double hydroxide and an organic resin are appropriately mixed with each other and stirred to give a coating composition. The stirring may be carried out using, for example, a coating disperser (a sand grinder). The stirring time may be selected appropriately. The stirring time is preferably 30 minutes or more in order to make sure that the powdery layered double hydroxide is sufficiently dispersed in the organic solvent.

In the invention, one, or two or more kinds of organic resins may be appropriately selected from epoxy resins, modified epoxy resins, polyhydroxy polyether resins, polyalkylene glycol-modified epoxy resins, urethane-modified epoxy resins, resins obtained by further modifying these resins, polyester resins, urethane resins, silicon resins and acrylic resins. In particular, a preferred resin from the viewpoint of corrosion resistance is an epoxy-based resin whose molecular weight has been optimized in order to achieve improved processability or which has been partially modified with a urethane, a polyester or an amine.

Further, one, or two or more kinds of additives may be added as required, with examples including organic color pigments (such as condensed polycyclic organic pigments and phthalocyanine organic pigments), color dyes (such as watersoluble azo metal dyes), inorganic pigments (such as titanium oxide), conductive pigments (for example, powders of metals such as zinc, aluminum and nickel, as well as iron phosphide and antimony-doped tin oxide), coupling agents (such as titanium coupling agents) and melamine-cyanuric acid adducts.

Next, the coating composition is applied to the surface of a steel sheet and is baked. The coating composition may be applied to the surface of a steel sheet by any means without limitation. A roll coater is suitably used.
The thermal drying (baking) treatment may be carried out using a dryer, a hot air furnace, a high frequency induction heating furnace, an infrared furnace or the like. From the viewpoint of corrosion resistance, a high frequency induction heating furnace is particularly preferable. The thermal treatment is desirably carried out at a reached sheet temperature in the range of 50 to 350°C, and preferably 80°C to 250°C. If the heating temperature is below 50°C, a large amount of solvent remains in the film, thus resulting in insufficient corrosion resistance. Heating at a temperature exceeding 350°C is not economical and can cause defects in the film, possibly resulting in a decrease in corrosion resistance.
By the method described hereinabove, a galvanized steel sheet may be obtained which has the organic inorganic complex coating containing the organic resin and the crystalline layered substance on the surface.

In the production of hot dip galvanized steel sheets or galvannealed steel sheets used in the invention, it is necessary that Al be added to the plating bath. However, elements other than Al which may be added are not particularly limited. That is, the advantageous effects of the invention are not deteriorated even when the plating bath or the coating contains Al and other elements such as Pb, Sb, Si, Sn, Mg, Mn, Ni, Ti and Li.

Further, the advantageous effects of the invention are not deteriorated even when elements such as N, Pb, Na, Mn, Ba, Sr and Si are incorporated into the organic inorganic complex coating as a result of the contamination of treatment liquids used for the film production with such impurities.

### EXAMPLES

The present invention will be described in greater detail by presenting examples below.
Layered double hydroxides were prepared by dropping an aqueous solution containing at least one kind of inorganic anion or organic anion (Aⁿ⁻) (Composition of aqueous solution 2 in Fable 1) to an aqueous solution shown in Table 1 which contained at least one kind of divalent cation (M²⁺) and at least one kind of trivalent cation (M³⁺) (Composition of aqueous solution in Table 1). In this process, the pH of the reaction suspension liquid was adjusted to be 10±0.1 by dropping a 2.0 M NaOH solution. Next, each of the obtained precipitates was filtered and dried to give a powdery layered double hydroxide. The obtained powdery substances were identified as being layered double hydroxides by X-ray diffractometry.

[Table 1]

**Table 1**

| No | Composition of aqueous solution 1 | Composition of aqueous solution 2 | Composition of crystalline layered substance (layered double hydroxide) (Identification result) |
|---|---|---|---|
| 1 | Magnesium nitrate hexahydrate 113g/L Aluminum nitrate nonahydrate 83g/L | Sodium carbonate decahydrate 31g/L | ICDD card reference code 01-089-0460 [Mg_{0.667}Al_{0.333}(OH)₂][CO₃²⁻]_{0.167·}0.5H₂O Magnesium Aluminum Hydroxide Carbonate Hydrate |
| 2 | Zinc nitrate heptahydrate 131g/L Aluminum nitrate nonahydrate 83g/L | Sodium carbonate decahydrate 31g/L | ICDD card reference code 00-048-1021 [Zn_{0.71}Al_{0.29}(OH)₂][CO₃²⁻]_{0.145}·H₂O Zinc Aluminum Carbonate Hydroxide Hydrate |
| 3 | Iron (II) sulfate heptahydrate 122g/L Iron (III) nitrate nonahydrate 89g/L | Sodium carbonate decahydrate 31g/L | ICDD card reference code 00-050-1380 [Fe_{0.67}Fe_{0.33}(OH)₂][CO₃²]_{0.145} 0.33H₂O Iron Carbonate Hydroxide Hydrate |
| 4 | Nickel nitrate hexahydrate 128g/L Iron (III) titrate nonahydrate 89g/L | Sodium sulfate decahydrate 31g/L | ICDD card reference code 00-042-0573 [Ni_{0.75}Fe_{0.25}(OH)₂][SO₄²⁻]_{0.125}0.5H₂O Iron Nickel Sulfate Hydroxide Hydrate |
| 5 | Magnesium nitrate hexahydrate 113g/L Aluminum nitrate nonahydrate 83g/L | Sodium hydroxide 5g/L | ICDD card reference code 00-038-0478 [Mg_{0.75}Al_{0.25}(OH)₂][OH-]_{0.25}·0·5H₂O Magnesium Aluminum Hydroxide Hydrate |
| 6 | Magnesium nitrate hexahydrate 113g/L Iron (III) nitrate 89g/L | Sodium chloride 6g/L | ICDD card reference code 00-020-0500 [Mg_{0.75}Fe_{0.25}(OH)₂][Cl⁻]_{0.25}0.5H₂O Magnesium Iron Oxide Chloride Hydroxide Hydrate |
| 7 | Calcium nitrate tetrahydrate 104g/L Aluminum nitrate nonahydrate 83g/L | Sodium chloride 6g/L | ICDD card reference code 00-035-0105 [Ca_{0.67}Al_{0.33}(OH)₂][Cl⁻]0.330.67H₂O Calcium Aluminum Hydroxide Chloride Hydrate |
| 8 | Magnesium titrate hexahydrate 113g/L Chromium (III) nitrate nonahydrate 88g/L | Sodium carbonate decahydrate 31g/L | ICDD card reference code 00-045-1475 [Mg_{0.67}Cr_{0.33}(OH)₂][CO₃²⁻]_{0.157}·0.5H₂O Magnesium Chromium Carbonate Hydroxide Hydrate |
| 9 | Iron (II) sulfate heptahydrate 122g/L Aluminum titrate nonahydrate 83g/L | Sodium carbonate decahydrate 31g/L | ICDD card reference code 00-051-1527 [Fe_{0.67}Al_{0.33}(OH)₂][CO₃²⁻]_{0.157} 0.5H₂O Iron Aluminum Oxide Carbonate Hydroxide Hydrate |
| 10 | Nickel nitrate hexahydrate 128g/L Aluminum nitrate nonahydrate 83g/L | Sodium carbonate decahydrate 31g/L | ICDD card reference code 00-015-0087 [Ni_{0.67}Al_{0.33}(OH)₂][CO₃²⁻]_{0.157}·0.5H₂O Nickel Aluminum Oxide Carbonate Hydroxide Hydrate |

According to the formulations described in Table 3, the layered double hydroxides prepared by the above process were appropriately mixed together with any of organic resin compositions shown in Table 2, and each mixture was stirred using a coating disperser (a sand grinder) for 45 minutes to give a coating composition for forming an organic inorganic complex coating on the surface of a galvanized steel sheet.

[Table 2]

**Table 2**

| No. | Type | Base resins |
|---|---|---|
| 1 | Thermosetting resins | Amine-modified epoxy resin/blocked isocyanate curing agent |
| 2 | | Urethane-modified epoxy resin/blocked isocyanate curing agent |
| 3 | | Epichlorohydrin epoxy resin/blocked isocyanate curing agent |
| 4 | | Polyester urethane resin/melamine curing agent |
| 5 | Water-dispersible resins | Ionomer of ethylene-acrylic acid copolymer |
| 6 | | Ethylene-acryl copolymer (emulsion polymerization) |
| 7 | | Styrene-acryl copolymer |
| 8 | | Polyurethane resin |

Cold rolled steel sheets having a sheet thickness of 0.7 mm were provided as base steel sheets. A galvannealed coating was formed on each steel sheet by a common method, and the coated steel sheet was temper rolled. Separately, a hot dip zinc coating or an electrolytic zinc coating was formed on similar steel sheets by a common method.
The surface of each of the various coated steel sheets obtained as described above was degreased with an alkali, washed with water and dried. Thereafter, any of the coating compositions was applied to the surface of the steel sheet with a roll coater and was baked (thermally dried) at a baking temperature shown in Table 3 (140°C). The thickness of the organic inorganic complex coating was adjusted by controlling the solid content (the content of residues after heating) of the coating composition or application conditions (such as roll force or rotational speed).

The organic inorganic complex coatings formed on the surface of the galvannealed steel sheets, the hot dip galvanized steel sheets and the electrolytically galvanized steel sheets were analyzed in order to measure the average film thickness as well as to identify the layered double hydroxides. To evaluate press-formability, sliding properties were evaluated by measuring the friction coefficient and evaluating galling properties. The methods used for the measurements and the identification are described below.

### 1) Measurement of average film thickness of organic inorganic complex coating

The coating was sputtered at an angle of 45° using FIB and the cross section was observed by ultralow-accelerating-voltage SEM. The values of film thickness measured at 10 sites were averaged to determine the film thickness of the coating.

### 2) Identification of layered double hydroxide

The presence of crystalline layered double hydroxide was confirmed by X-ray diffractometry. The peaks which were obtained by X-ray diffractometry using Cu-Kα radiation were verified against ICDD cards and the layered double hydroxide was identified. The cards which agreed with the obtained data are described below.
i) Magnesium Aluminum Hydroxide Carbonate Hydrate
   ICDD card reference code: 01-089-0460
   [Mg_{0.667}Al_{0.333}(OH)₂][CO₃²⁻]_{0.167}·0.5H₂O
ii) Zinc Aluminum Carbonate Hydroxide Hydrate
   ICDD card reference code: 00-048-1021
   [Zn₀.₇₁Al_{0.29}(OH)₂][CO₃²⁻]_{0.145}·H₂O
iii) Iron Carbonate Hydroxide Hydrate
   ICDD card reference code: 00-050-1380
   [Fe_{0.67}Fe_{0.33}(OH)₂][CO₃²⁻]_{0.145}·0.33H₂O
iv) Iron Nickel Sulfate Hydroxide Hydrate
   ICDD card reference code: 00-042-0573
   [Ni_{0.75}Fe_{0.25}(OH)₂][SO₄²⁻]_{0.125}·0.5H₂O
v) Magnesium Aluminum Hydroxide Hydrate
   ICDD card reference code: 00-038-0478
   [Mg_{0.75}Al_{0.25}(OH)₂][OH⁻]_{0.25}·0.5H₂O
vi) Magnesium Iron Oxide Chloride Hydroxide Hydrate
   ICDD card reference code: 00-020-0500
   [Mg_{0.75}Fe_{0.25}(OH)₂][Cl⁻]_{0.25}·0.5H₂O
vii) Calcium Aluminum Hydroxide Chloride Hydrate
   ICDD card reference code: 00-035-0105
   [Ca_{0.67}Al_{0.33}(OH)₂][Cl⁻]_{0.33}·0.67H₂O
viii) Magnesium Chromium Carbonate Hydroxide Hydrate
   ICDD card reference code: 00-045-1475
   IM9_{0.67}Cr_{0.33}(OH)₂][CO₃²⁻]_{0.157}·0.5H₂O
ix) Iron Aluminum Oxide Carbonate Hydroxide Hydrate
   ICDD card reference code: 00-051-1527
   [Fe_{0.67}Al_{0.33}(OH)₂][CO₃²⁻]_{0.157}·0.5H₂O
x) Nickel Aluminum Oxide Carbonate Hydroxide Hydrate
   ICDD card reference code: 00-015-0087
   [Ni _{0.67}Al_{0.33}(OH)₂][CO₃²⁻,OH⁻]_{0.157}·0.5H₂O

### 3) Measurement of friction coefficient

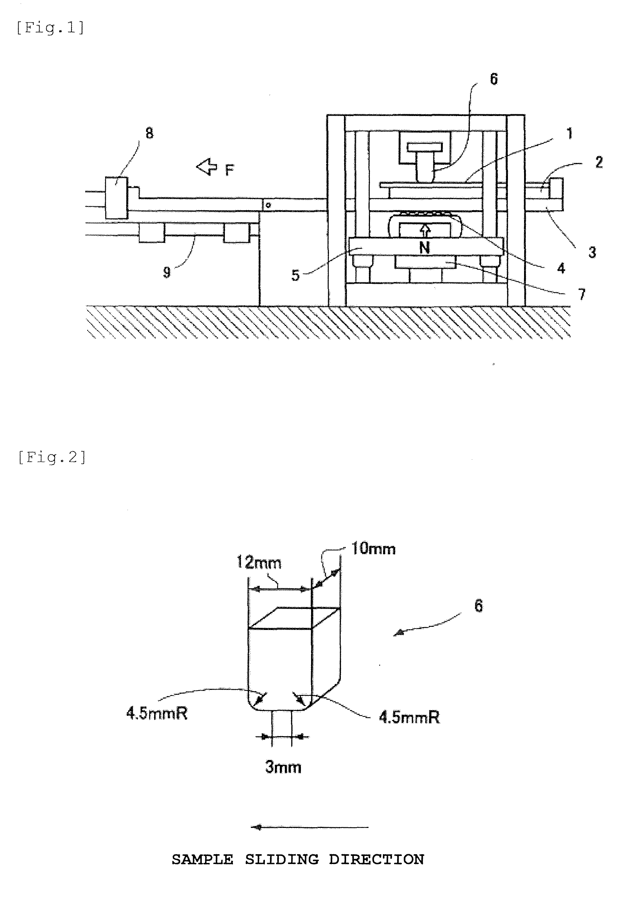

In order to evaluate press-formability (in particular, formability at a portion of steel sheet which was in contact with an object when the steel sheet would be drawn or slid), the dynamic friction coefficient of each test material was measured in the following manner. Fig. 1 is a schematic front view illustrating a friction coefficient measuring apparatus. As illustrated in the figure, a friction coefficient measurement sample 1 collected from the test material was fixed on a sample table 2. The sample table 2 was fixed on the upper surface of a horizontally movable slide table 3. Under the lower surface of the slide table 3, a vertically movable slide table support 5 was provided which had rollers 4 in contact with the lower surface of the slide table 3. The slide table support 5 was fitted with a first load cell 7 which was capable of measuring pressure load N applied by a bead 6 to the friction coefficient measurement sample 1 as a result of the elevation of the slide table support. At one end of the slide table 3, a second load cell was provided which was capable of measuring sliding frictional force F caused when the slide table 3 was moved in the horizontal direction while applying the pressure force. Prior to the testing, the surface of the friction coefficient measurement sample 1 was coated with a lubricant oil which was press washing oil PRETON R352z manufactured by Sugimura Chemical Industrial Co., Ltd.

Fig. 2 is a schematic perspective view illustrating the shape and the size of one of the used beads (hereinafter, bead shape 1). The friction coefficient measurement sample 1 was caused to slide while the lower surface of the bead 6 was pressed against the surface of the sample. The bead 6 shown in Fig. 2 was 10 mm in width and 12 mm in length in the sample sliding direction. The lower edges of the bead in the sliding direction each had a curved surface with a curvature of 4.5 mmR. The lower surface of the bead against which the sample was to be pressed was a flat surface 10 mm in width and 3 mm in length in the sliding direction.

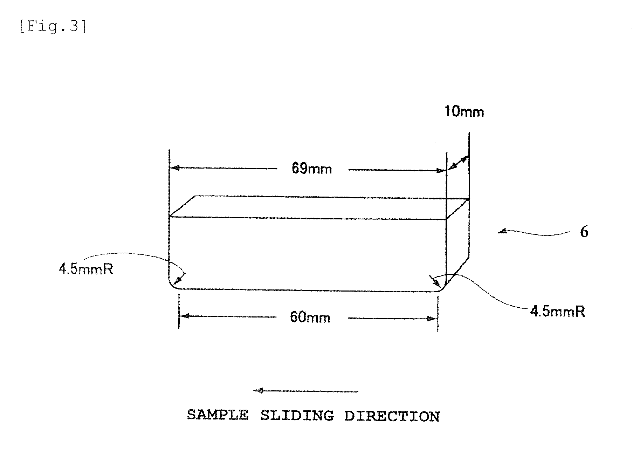

Fig. 3 is a schematic perspective view illustrating the shape and the size of one of the used beads (hereinafter, bead shape 2). The friction coefficient measurement sample 1 was caused to slide while the lower surface of the bead 6 was pressed against the surface of the sample. The bead 6 shown in Fig. 3 was 10 mm in width and 69 mm in length in the sample sliding direction. The lower edges of the bead in the sliding direction each had a curved surface with a curvature of 4.5 mmR. The lower surface of the bead against which the sample was to be pressed was a flat surface 10 mm in width and 60 mm in length in the sliding direction.

The measurement of friction coefficient was carried out under any of 3 conditions in which the temperature was room temperature (25°C) and the pressure load N was 400, 1200 or 1600 kgf so that the contact pressure would be a value expected in the press forming of high-strength steel sheets. Further, the pulling rate (the velocity of horizontal movement of the slide table 3) for the sample was 100 cm/min or 20 cm/min. The pressure load N and the sliding frictional force F were measured under any of these conditions. The friction coefficient µ between the test material and the bead was calculated from the equation: µ = F/N. The bead shape, the pressure load conditions and the pulling rate were used in the following combinations.
Condition 1: bead shape 1, pressure load 400 kgf and pulling rate 100 cm/min
Condition 2: bead shape 1, pressure load 1200 kgf and pulling rate 100 cm/min
Condition 3: bead shape 1, pressure load 1600 kgf and pulling rate 100 cm/min
Condition 4: bead shape 2, pressure load 400 kgf and pulling rate 20 cm/min

### 4) Evaluation of galling properties

Galvanized steel sheets coated with pure zinc increase the sliding friction due to the coating having become attached to a mold after the coated portion has undergone a long sliding distance. Thus, galling tendency is an important property in addition to the dynamic friction coefficient. Using the friction coefficient measuring apparatus illustrated in Fig. 1, a sliding test was repeatedly carried out 50 times. The number of repetition which caused an increase in friction coefficient of 0.01 or more was determined. Galling properties were evaluated assuming that galling would be caused at the obtained number of repetition. When there was no increase in friction coefficient even after the sliding test was repeated 50 times, the number of repetition was determined to be at least 50 times. Similarly to 3) Measurement of friction coefficient, the test was carried out under any of the above-described conditions 1 to 3 so that the contact pressure would be a value expected in the press forming of high-strength steel sheets.
The results obtained by these tests as well as the test conditions are described in Table 3.

[Table 3]

**Table 3**

| Category | No. | Coated steel sheet type | Surface coating layer | | | | | | Friction coefficient | | | | Mold scoring properties | | |
|---|---|---|---|---|---|---|---|---|---|---|---|---|---|---|---|
| | | | Organic resin | | Crystalline layered substance | | Average film thickness (µm) | Baking Temp (°C) | Cond 1 | Cond 2 | Cond 3 | Cond 4 | Cond 1 | Cond 2 | Cond 3 |
| | | | Kind *2 | Amount *3 | Kind *1 | Amount *3 | | | | | | | | | |
| CompEx | 1 | | 1 | 100 | - | - | 10 | 140 | 0 127 | 0 049 | 0047 | 0280 | 5 | 3 | 2 |
| Inv Ex. | 2 | | 1 | 100 | 1 | 20 | 10 | 140 | 0 062 | 0025 | 0017 | 0 142 | at least 54 | 32 | 22 |
| Inv Ex. | 3 | | 1 | 100 | 2 | 20 | 10 | 140 | 0 060 | 0 024 | 0 017 | 0 142 | at least 50 | 33 | 23 |
| Inv Ex. | 4 | | 1 | 100 | 3 | 20 | 10 | 140 | 0061 | 0026 | 0016 | 0143 | at least 50 | 30 | 20 |
| Inv Ex. | 5 | | 1 | 100 | 4 | 20 | 10 | 140 | 0 059 | 0024 | 0016 | 0142 | at least 50 | 31 | 21 |
| Inv Ex. | 6 | | 1 | 100 | 5 | 20 | 10 | 140 | 0058 | 0024 | 0016 | 0143 | at least 50 | 33 | 20 |
| Inv Ex. | 7 | | 1 | 100 | 6 | 20 | 10 | 140 | 0060 | 0024 | 0017 | 0140 | at least 50 | 35 | 20 |
| Inv Ex. | 8 | | 1 | 100 | 7 | 20 | 10 | 140 | 0061 | 0025 | 0017 | 0142 | at least 50 | 29 | 23 |
| Inv Ex. | 9 | | 1 | 100 | 8 | 20 | 10 | 140 | 0059 | 0025 | 0018 | 0142 | at least 50 | 28 | 23 |
| Inv Ex. | 10 | | 1 | 100 | 9 | 20 | 10 | 140 | 0060 | 0025 | 0018 | 0143 | at least 50 | 31 | 25 |
| Inv Ex. | 11 | | 1 | 100 | 10 | 20 | 10 | 140 | 0 060 | 0 026 | 0017 | 0140 | at least 50 | 30 | 22 |
| Inv Ex. | 12 | | 2 | 100 | 1 | 20 | 10 | 140 | 0 060 | 0025 | 0 017 | 0141 | at least 50 | 32 | 22 |
| Inv Ex | 13 | Hot dip galvanized steel sheet (G1) | 3 | 100 | 1 | 20 | 10 | 140 | 0062 | 0 024 | 0016 | 0 141 | at least 50 | 33 | 22 |
| Inv Ex. | 14 | | 4 | 100 | 1 | 20 | 10 | 140 | 0061 | 0025 | 0017 | 0140 | at least 50 | 35 | 23 |
| Inv Ex. | 15 | | 5 | 100 | 1 | 20 | 10 | 140 | 0059 | 0025 | 0018 | 0140 | at least 50 | 33 | 26 |
| Inv Ex. | 16 | | 6 | 100 | 1 | 20 | 10 | 140 | 0 060 | 0025 | 0016 | 0140 | at least 50 | 32 | 25 |
| Inv Ex. | 17 | | 7 | 100 | 1 | 20 | 10 | 140 | 0061 | 0025 | 0016 | 0140 | at least 50 | 29 | 22 |
| Inv Ex. | 18 | | 8 | 100 | 1 | 20 | 10 | 140 | 0 060 | 0026 | 0016 | 0142 | at least 50 | 28 | 24 |
| Inv Ex. | 19 | | 1 | 100 | 1 | 05 | 10 | 140 | 0071 | 0030 | 0025 | 0162 | 39 | 20 | 10 |
| Inv Ex. | 20 | | 1 | 100 | 1 | 1 | 10 | 140 | 0068 | 0029 | 0022 | 0155 | 41 | 21 | 12 |
| Inv Ex. | 21 | | 1 | 100 | 1 | 10 | 10 | 140 | 0065 | 0027 | 0020 | 0150 | 45 | 25 | 16 |
| Inv Ex. | 22 | | 1 | 100 | 1 | 100 | 10 | 140 | 0055 | 0020 | 0013 | 0134 | at least 50 | at least 50 | at least 50 |
| Inv Ex. | 23 | | 1 | 100 | 1 | 120 | 10 | 140 | 0050 | 0019 | 0012 | 0129 | at least 50 | at least 50 | at least 50 |
| Inv Ex. | 24 | | 1 | 100 | 1 | 20 | 01 | 140 | 0072 | 0030 | 0025 | 0162 | 39 | 20 | 10 |
| Inv Ex. | 25 | | 1 | 100 | 1 | 20 | 05 | 140 | 0068 | 0 028 | 0022 | 0155 | 41 | 21 | 12 |
| Inv Ex. | 26 | | 1 | 100 | 1 | 20 | 15 | 140 | 0056 | 0020 | 0013 | 0134 | at least 50 | at least 50 | 42 |
| Inv Ex. | 27 | | 1 | 100 | 1 | 20 | 20 | 140 | 0052 | 0019 | 0012 | 0129 | at least 50 | at least 50 | at least 50 |
| Comp Ex | 28 | | 1 | 100 | | | 10 | 140 | 0176 | 0118 | 0111 | 0213 | - | - | - |
| Inv Ex. | 29 | | 1 | 100 | 1 | 20 | 10 | 140 | 0064 | 0026 | 0019 | 0142 | - | - | - |
| Inv Ex. | 30 | | 1 | 100 | 2 | 20 | 10 | 140 | 0062 | 0 025 | 0019 | 0143 | - | - | - |
| Inv Ex. | 31 | | 1 | 100 | 3 | 20 | 10 | 140 | 0061 | 0025 | 0018 | 0143 | - | - | - |
| Inv Ex. | 32 | | 1 | 100 | 4 | 20 | 10 | 140 | 0060 | 0025 | 0017 | 0143 | - | - | - |
| Inv Ex | 33 | Galvannealed steel sheet (GA) | 1 | 100 | 5 | 20 | 10 | 140 | 0060 | 0026 | 0019 | 0143 | - | - | - |
| Inv Ex | 34 | | 1 | 100 | 6 | 20 | 10 | 140 | 0062 | 0026 | 0017 | 0142 | - | - | - |
| Inv Ex. | 35 | | 1 | 100 | 7 | 20 | 10 | 140 | 0063 | 0026 | 0017 | 0140 | - | - | - |
| Inv Ex. | 36 | | 1 | 100 | 8 | 20 | 10 | 140 | 0062 | 0024 | 0016 | 0140 | - | - | - |
| Inv Ex | 37 | | 1 | 100 | 9 | 20 | 10 | 140 | 0060 | 0024 | 0017 | 0143 | - | - | - |
| Inv Ex. | 38 | | 1 | 100 | 10 | 20 | 10 | 140 | 0062 | 0024 | 0017 | 0143 | - | - | - |
| Comp Ex | 39 | | 1 | 100 | - | - | 10 | 140 | 0112 | 0042 | 0041 | 0.248 | 3 | 2 | 1 |
| Inv Ex. | 40 | | 1 | 100 | 1 | 20 | 10 | 140 | 0062 | 0025 | 0018 | 0143 | at least 50 | 32 | 22 |
| Inv Ex. | 41 | | 1 | 100 | 2 | 20 | 10 | 140 | 0060 | 0024 | 0018 | 0143 | at least 50 | 33 | 23 |
| Inv Ex | 42 | | 1 | 100 | 3 | 20 | 10 | 140 | 0063 | 0024 | 0018 | 0142 | at least 50 | 30 | 20 |
| Inv Ex. | 43 | | 1 | 100 | 4 | 20 | 10 | 140 | 0062 | 0026 | 0019 | 0140 | at least 50 | 31 | 21 |
| Inv Ex. | 44 | Electrolytically galvanized steel sheet (EG) | 1 | 100 | 5 | 20 | 10 | 140 | 0061 | 0025 | 0017 | 0142 | at least 50 | 33 | 20 |
| Inv E. | 45 | | 1 | 100 | 6 | 20 | 10 | 140 | 0062 | 0025 | 0017 | 0141 | at least 50 | 35 | 20 |
| Inv Ex. | 46 | | 1 | 100 | 7 | 20 | 10 | 140 | 0062 | 0024 | 0017 | 0142 | at least 50 | 29 | 23 |
| Inv Ex. | 47 | | 1 | 100 | 8 | 20 | 10 | 140 | 0063 | 0024 | 0018 | 0143 | at least 50 | 28 | 23 |
| Inv Ex. | 48 | | 1 | 100 | 9 | 20 | 10 | 140 | 0061 | 0024 | 0019 | 0141 | at least 50 | 31 | 25 |
| Inv Ex | 49 | | 1 | 100 | 10 | 20 | 10 | 140 | 0061 | 0024 | 0018 | 0141 | at least 50 | 30 | 22 |

| | | | | | | | | | | | | | | | |
|---|---|---|---|---|---|---|---|---|---|---|---|---|---|---|---|
| *1 No of crystalline layered substance described in Table 1 *2 No of organic resin described in Table2 2 *3 parts by weight (solid content) wt% | | | | | | | | | | | | | | | |

The test results described in Table 3 show the following.
Sample No. 1 using a hot dip galvanized steel sheet (GI) was a comparative example without any crystalline layered substance being contained. The friction coefficient was high and the galling properties were poor. Samples Nos. 2 to 27 were inventive examples containing the organic resin and the crystalline layered substance. In comparison with the results of Comparative Example No. 1, the friction coefficient was low and the galling properties were good.

Sample No. 28 using a galvannealed steel sheet (GA) was a comparative example without any crystalline layered substance being contained. The friction coefficient was high. Samples Nos. 29 to 38 were inventive examples containing the organic resin and the crystalline layered substance. In comparison with the results of Comparative Example No. 28, the friction coefficient was low.

Sample No. 39 using an electrolytically galvanized steel sheet (EG) was a comparative example without any crystalline layered substance being contained. The friction coefficient was high and the galling properties were poor. Samples Nos. 40 to 49 were inventive examples containing the organic resin and the crystalline layered substance. In comparison with the results of Comparative Example No. 39, the friction coefficient was low and the galling properties were good.

### Industrial Applicability

The galvanized steel sheets according to the present invention are excellent in press-formability and can be used in various fields, in particular for automobile bodies which are necessarily manufactured from hardly formable materials.

### Reference Signs List

- 1: FRICTION COEFFICIENT MEASUREMENT SAMPLE
- 2: SAMPLE TABLE
- 3: SLIDE TABLE
- 4: ROLLERS
- 5: SLIDE TABLE SUPPORT
- 6: BEAD
- 7: FIRST LOAD CELL
- 8: SECOND LOAD CELL
- 9: RAIL
- N: PRESSURE LOAD
- F: SLIDING FRICTIONAL FORCE

## Claims

1. A galvanized steel sheet which has an organic inorganic complex coating containing an organic resin and a crystalline layered substance on the surface, the organic inorganic complex coating having an average film thickness of 0.10 to 2.0 µm and containing the crystalline layered substance in a solid content of not less than 0.5 parts by weight with respect to 100 parts by weight of the solid content of the organic resin.

2. The galvanized steel sheet according to Claim 1, wherein the crystalline layered substance is a layered double hydroxide represented by [M²⁺₁₋ₓM³⁺ₓ(OH)₂][Aⁿ⁻]_{x/n}·zH₂O wherein M²⁺ is one, or two or more selected from Mg²⁺, Ca²⁺, Fe²⁺, Ni²⁺, Zn²⁺, Pb²⁺ and Sn²⁺, M³⁺ is one, or two or more selected from Al³⁺, Fe³⁺, Cr³⁺ , 3/4Zr⁴⁺ and Mo³⁺, and Aⁿ⁻ is one, or two or more selected from OH⁻, F⁻, CO₃²⁻, Cl⁻, Br⁻, (C₂O₄)²⁻, I⁻, (NO₃)⁻, (SO₄)²⁻, (BrO₃)⁻, (IO₃)⁻, (V₁₀O₂₈)⁶⁻, (Si₂O₅)²⁻, (ClO₄)⁻, (CH₃COO)⁻, [C₆H₄(CO₂)₂]²⁻, (C₆H₅COO)⁻, [C₈H₁₆(CO₂)₂]²⁻, n(C₈H₁₇SO₄)⁻, n (C₁₂H₂₅SO₄)⁻, n(C₁₈H₃₇SO₄)⁻ and SiO₄⁴⁻.

3. The galvanized steel sheet according to Claim 1, wherein the crystalline layered substance is a layered double hydroxide represented by [M²⁺₁₋ₓM³⁺ₓ(OH)₂] [Aⁿ⁻]_{x/n}· zH₂O wherein M²⁺ is one, or two or more selected from Mg²⁺, Ca²⁺, Fe²⁺, Ni²⁺ and Zn²⁺, M³⁺ is one, or two or more selected from Al³⁺, Fe³⁺ and Cr³⁺, and Aⁿ⁻ is one, or two or more selected from OH⁻, CO₃²⁻, Cl⁻ and (SO₄)²⁻.

4. The galvanized steel sheet according to any one of Claims 1 to 3, wherein the organic resin is one, or two or more selected from epoxy resins, modified epoxy resins, polyhydroxy polyether resins, polyalkylene glycol-modified epoxy resins, urethane-modified epoxy resins, resins obtained by further modifying these resins, polyester resins, urethane resins, silicon resins and acrylic resins.
